# EUROPÄISCHE PATENTSCHRIFT

(11) **EP 1 710 518 B1**
(45) Veröffentlichungstag und Bekanntmachung des Hinweises auf die Patenterteilung: **28.10.2009**
(21) Anmeldenummer: 06010589.7
(22) Anmeldetag: 12.04.2005
(51) Int. Cl.: F24H 9/12, F16K 3/08

(54) **Anschlussarmatur**
Connection fitting
Dispositif de raccordement

(30) Priorität: 07.06.2004 AT 9862004
(43) Veröffentlichungstag der Anmeldung: 11.10.2006
(62) Teilanmeldung aus: 05450065.7
(73) Patentinhaber: Herz Armaturen Ges.m.b.H., 1230 Wien (AT)
(72) Erfinder: Lomot, Dimitri, 1030 Wien (AT)
(74) Vertreter: Wildhack & Jellinek

(56) Entgegenhaltungen:
- BE-A1- 878 153
- FR-A- 1 427 995
- GB-A- 1 320 934
- GB-A- 2 259 130
- US-A- 4 376 459

## Beschreibung

Die Erfindung betrifft eine Anschlussarmatur gemäß dem Oberbegriff des Anspruchs 1. Eine solche Anschlussarmatur ist z.B. aus dem Dokument FR 1 427 995 bekannt.

Weitere Anschlussarmaturen zum Anschluss eines Heizkörpers an einen Heizkreislauf sind in vielfältiger Ausführung bekannt, z.B aus der BE 878 153 A1. der GB 1 320 934 A, der US 4 376 459 A oder der GB 2 259 130 A.

Aufgabe der Erfindung ist es, eine einfach zu bedienende und zu fertigende sowie eine strömungstechnisch vorteilhafte Anschlussarmatur zu schaffen. Weiters ist es Aufgabe der Erfindung, ein Ventil vorzusehen, das auf konstruktiv einfache Art ein Regulieren des Stromes bzw. der Durchflusswege während des Betriebes und eine effektive Absperrung des Heizkörpers ermöglicht.

Diese Aufgabe wird durch die kennzeichnenden Merkmale des Anspruchs 1 gelöst.

Durch die vorgeschlagenen Maßnahmen wird es ermöglicht, das Ventil sehr klein und kompakt auszuführen. Außerdem ergeben sich Vorteile durch einen vereinfachten Herstellungsprozess bzw. durch Gewicht- und Materialersparnisse. Es wird eine exakte und mit weniger Aufwand herstellbare Anschlussgeometrie gewährt. Ferner wird der Aufbau einfacher und damit sind Dichtigkeit bzw. Abdichtungsmöglichkeiten einfacher herstellbar. Die Armatur ist einfach durch Giessen oder Schmieden herstellbar. In konstruktiv einfacher und stabiler Weise wird die Möglichkeit zur Einstellung der Durchflussrichtung durch ein Küken, gemäß Anspruch 1, gewährleistet.

Die Merkmale des Anspruchs 2 haben den Vorteil der leichteren und genaueren Einstellbarkeit.

Eine alternative Ausführungsform wird mit den Merkmalen des Anspruchs 3 beschrieben. Derartige Küken sind besonders einfach herzustellen und haben geringes Gewicht.

Eine vorteilhafte Ausgestaltung der Durchflusswege durch das alternativ ausgestaltete Küken wird in den Merkmalen des Anspruchs 4 dargestellt, womit die Durchflusswege leicht und präzise einstellbar sind.

Um die Dichtheit des Ventils in Sperrstellung zu gewährleisten, ist es vorteilhaft, wenn die Merkmale des Anspruchs 5 vorgesehen sind. Das diametrale Gegenüberliegen der Dichtflächen hat den Vorteil der leichteren und genaueren Einstellbarkeit.

Durch die erfindungsgemäßen Merkmale des Anspruchs 6 wird eine konstruktiv einfache Methode vorgesehen, um die heizkörperseitigen Ausgänge bzw. Eingänge des Ventils platzsparend anordnen zu können.

Durch die Merkmale des Anspruchs 7 kann sichergestellt werden, dass das Heizmedium immer in den gleichen Anschluss des Heizkörpers, nämlich vorteilhafterweise den Radiatorvorlaufanschluss, einströmt und zwar unabhängig von der Strömungsrichtung im Heizkreislauf. Damit wird weiters gewährleistet, dass das Ventil auf die bauseitig meist vormontierten Stutzen aufgesetzt werden kann, unabhängig von der im Heizkreislauf vorgegebenen Strömungsrichtung des Heizmediums. Das heißt, derartige Ventile können ohne Kenntnis bzw. Berücksichtigung der Strömungsrichtung montiert werden ohne Rohrleitungen überkreuzen zu müssen. Die Einstellung der Durchflussrichtung erfolgt später.

Die Merkmale des Anspruchs 8 stellen sicher, dass die Durchflusswege für das Heizmedium in vorteilhafter Weise einfach einstellbar sind. Somit kann der Zufluss des Heizmediums zum Heizkörper, gegebenenfalls auch komplett, unterbunden werden, und eine Reparatur bzw. ein Austausch des Heizkörpers ist möglich, ohne dass der Heizkreislauf beeinträchtigt bzw. unterbrochen wird.

Die Merkmale des Anspruchs 9 gewähren durch verschiedene konstruktive Ausgestaltungen des Ventils verschiedene Vorteile. Das erste Merkmal in Anspruch 9 verbessert die Regelungs- und Zugangsmöglichkeiten, wodurch maximale Anschlussvariabilität gewährleistet wird. Durch das erste Merkmal ergibt sich der Vorteil, dass die Anschlüsse sehr einfach mit dem Heizkreislauf bzw. mit einem geraden, mit Heizmedium gefüllten Rohr verbindbar sind. Das zweite Merkmal verleiht dem Ventil eine gewisse Symmetrie und Ausgewogenheit, wodurch die Stabilität und Langlebigkeit des Ventils unterstützt wird. Außerdem ist das Ventil kleiner und kompakter und einfacher herzustellen. Gleiches gilt für das dritte Merkmal. Die Anordnung der Durchflusskanäle im Küken gemäß dem vierten Merkmal erlaubt eine einfache Herstellung derselben.

Um zu gewährleisten, dass auch bei gesperrter Ventilstellung ein konstanter Heizmediumstrom vorliegt und der Heizkreislauf ohne Unterbrechung bleibt, ist es vorteilhaft, wenn die Merkmale des Anspruchs 10 ausgebildet sind. Um das Ventil stabiler gegen mechanische Einflüsse zu machen bzw. auf das Küken ausgeübte Drücke bzw. Druckbewegungen abzufangen bzw. zu verteilen, ist es vorteilhaft, wenn der Lagerzapfen vorgesehen ist.

Damit das Heizmedium vom Ventil in den Heizkörper einströmen kann ist es vorteilhaft, wenn die Merkmale des Anspruches 11 gegeben sind.

Für eine möglichst einfache, vielseitige und unkomplizierte Montage ist es außerdem vorteilhaft, die Merkmale des Anspruchs 11 vorzusehen, da damit das Ventil ohne Weiteres auf eine beliebige Seite des Heizkörpers montiert werden kann bzw. der Anschluss an den Heizkreislauf in beliebiger radialer Richtung erfolgen kann.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt eine erfindungsgemäße Anschlussarmatur inklusive Heizkörper mit einer thermostatischen Reguliereinheit.
Fig. 2 zeigt eine erfindungsgemäße Anschlussarmatur inklusive Heizkörper mit einer manuellen Reguliereinheit.
Fig. 3a zeigt eine Schnittansicht des Ventils von der Seite bei einer Durchflussstellung 70.
Fig. 3b zeigt eine Schnittansicht des Ventils gemäß der Schnittlinie A-A bei einer Durchflussstellung 70.
Fig. 3c zeigt eine Draufsicht auf das Ventil bei einer Durchflussstellung 70.
Fig. 3d zeigt eine Detailansicht des Kükens mit schematischen Durchflusswegen bei einer Durchflussstellung 70.
Fig. 4a zeigt eine Schnittansicht des Ventils von der Seite bei einer Durchflussstellung 80.
Fig. 4b zeigt eine Schnittansicht des Ventils gemäß der Schnittlinie A-A bei einer Durchflussstellung 80.
Fig. 4c zeigt eine Draufsicht auf das Ventil bei einer Durchflussstellung 80.
Fig. 4d zeigt eine Detailansicht des Kükens mit schematischen Durchflusswegen bei einer Durchflussstellung 80.
Fig. 5a zeigt eine Schnittansicht des Ventils von der Seite bei einer Sperrstellung 90.
Fig. 5b zeigt eine Schnittansicht des Ventils gemäß der Schnittlinie A-A bei einer Sperrstellung 90.
Fig. 5c zeigt eine Draufsicht auf das Ventil bei einer Sperrstellung 90.
Fig. 6a zeigt eine Ansicht von unten einer alternativen Ausführungsform eines Kükens.
Fig. 6b zeigt eine Ansicht des alternativen Kükens.
Fig. 6c und 6d zeigen Schnittansichten durch das alternative Küken.
Fig. 7a zeigt eine Detailansicht des alternativen Kükens mit angedeuteten Durchflusswegen bei einer Durchflussstellung 70.
Fig. 7b zeigt eine Detailansicht des alternativen Kükens mit angedeuteten Durchflusswegen bei einer Durchflussstellung 80.

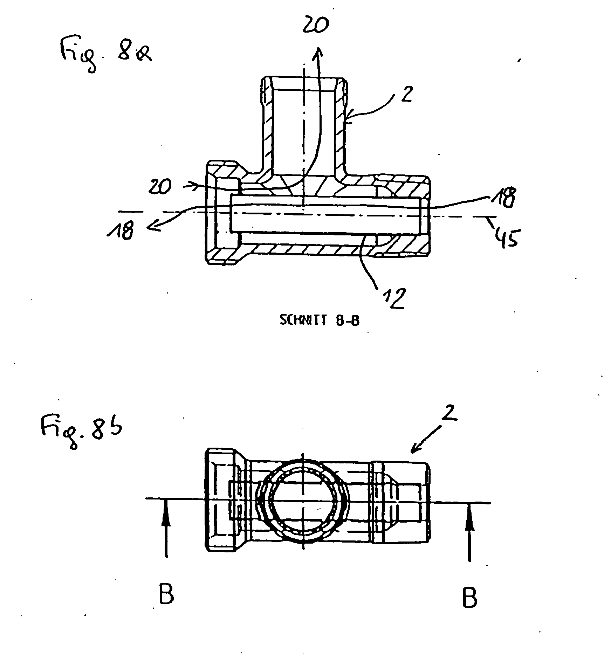

Fig. 8a und 8b zeigen eine Schnittansicht des T-Stücks von der Seite gemäß der Schnittlinie B-B und eine Ansicht des T-Stücks von oben.

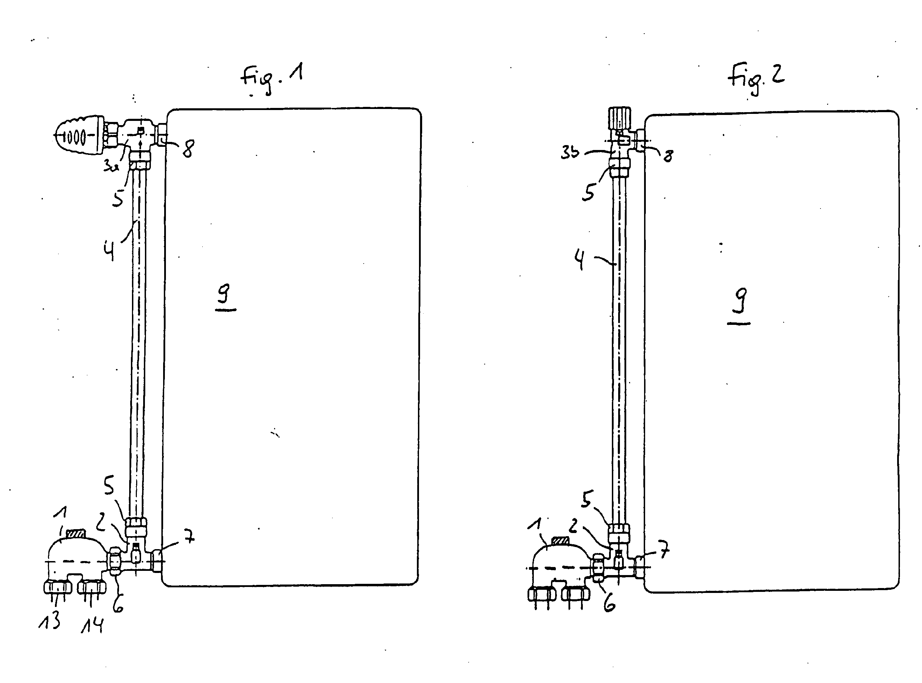

Aus Fig. 1 und Fig. 2 ist ersichtlich, wie die einzelnen Komponenten der erfindungsgemäßen Anschlussarmatur zusammenwirken. Die Anschlussarmatur umfasst zumindest ein Ventil 1 und kann gegebenenfalls, wie im Folgenden beschrieben, neben dem Ventil 1 noch weitere Komponenten umfassen.

Das Ventil 1 ist mit seinen beiden Anschlüssen 13, 14 an einen, insbesondere als Einrohrsystem ausgebildeten, Heizkreislauf anschließbar und über einen weiteren Anschluss mit einem T-Stück 2 verbunden. Der Heizkörper 9 selbst besitzt zwei Anschlüsse, und zwar einen Radiatorvorlaufanschluss 8 und einen Radiatorrücklaufanschluss 7. Zwischen dem T-Stück 2 und dem Radiatorvorlaufanschluss 8, insbesondere an einem Verbindungsrohr 4, ist eine Reguliereinheit 3a, 3b vorgesehen, die entweder thermostatisch reguliert ist oder manuell reguliert werden kann. Die Reguliereinheit 3a,3b kann auch direkt am Ventil 1 oder im Bereich des T-Stücks 2 vorgesehen sein.

Aus strömungstechnischen Gründen und um im Heizkörper 9 eine optimale thermische Verteilung des Heizmediums zu erzeugen, befindet sich der Radiatorvorlaufanschluss 8 am oberen Ende des Heizkörpers 9 und das Heizmedium wird über das Verbindungsrohr 4 und über die Reguliereinheit 3a, 3b über diesen Radiatorvorlaufanschluss 8 in den Heizkörper 9 eingespeist. Das abgekühlte Heizmedium verlässt über den am unteren Ende des Heizkörpers vorgesehenen Radiatorrücklaufanschluss 7 den Heizkörper 9 und fließt über das T-Stück 2 über das Ventil 1 zurück in den Heizkreislauf.

Es ist auch möglich, dass die Anschlussarmatur nur aus dem direkt über entsprechende Anschlussstutzen an den Heizkörper 9 angeschlossenen Ventil 1 besteht bzw. gebildet wird.

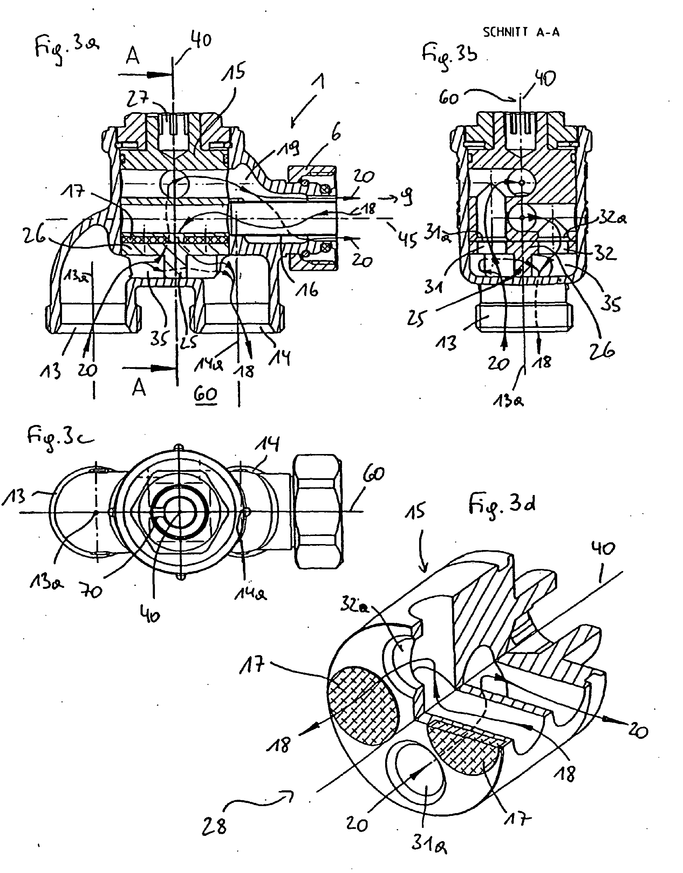

Fig. 3a-c, 4a-c und 5a-c zeigen detaillierte Ansichten des gesamten Ventils 1 bei unterschiedlichen Durchfluss- bzw. Sperrstellungen 70, 80, 90.

Das Ventil 1 besitzt zwei heizkreislaufseitige Anschlüsse, nämlich einen ersten Anschluss 13 und einen zweiten Anschluss 14, durch die das Heizmedium von einem, insbesondere als Einrohr-System ausgebildeten, Heizkreislauf ins Ventil 1 und in weiterer Folge in den Heizkörper 9 sowie aus dem Heizkörper 9 über das Ventil 1 wieder zurück in den Heizkreislauf strömen kann. Welcher der beiden Anschlüsse 13,14 als Vorlaufanschluss dienen soll, ist frei wählbar.

Im Ventils 1 befindet sich ein im Wesentlichen zylindrisches Küken 15, das bezüglich seiner zentralen Längs- bzw. Zylinderachse 40 verdrehbar in einer Ausnehmung bzw. Bohrung des Ventils 1 auf einem Kükenabstützboden 26 gelagert ist. Das Küken 15 steuert die Durchflusswege des Heizmediums vom Heizkreislauf durch das Ventil 1 hindurch zum Heizkörper 9 und zurück bzw. gibt diese frei oder sperrt diese ab.

Das dargestellte Ventil 1 besitzt in seinem bezüglich der Anschlüsse 13 und 14 fernen Bereich einen für den Heizungsvorlauf 20 vorgesehenen Ausgangkanal 19, durch den Heizmedium durch einen, insbesondere seitlich am Ventil vorgesehenen, Auslass aus dem Ventil 1 zum Heizkörper 9 hin ausströmen kann. Außerdem besitzt das Ventil 1 einen, insbesondere rohrförmigen, für den Heizungsrücklauf 18 vorgesehenen Eingangskanal 16, durch den Heizmedium vom Heizkörper 9 in das Ventil 1 und gegebenenfalls in das Küken 15 eingespeist wird. Von dort gelangt das Heizmedium zurück zum Heizkreislauf.

Die beiden Kanäle 16 und 19 sind in der erfindungsgemäßen Ausführungsform vorteilhafterweise konstruktiv so ausgebildet, dass der Eingangskanal 16 zumindest teilweise im Ausgangskanal 19 liegt bzw. zumindest teilweise von diesem umschlossen wird. Dadurch kann das Medium durch den Ausgangskanal 19, und zwar um den Eingangskanal 16 herum, aus dem Ventil 1 in Richtung Heizkörper 9 ausströmen und der Heizungsrücklauf 18 im Inneren dieser Konstruktion, nämlich im Eingangskanal 16, räumlich vom Heizungsvorlauf 20 getrennt, ins Ventil 1 zurückströmen. Eine derartige Ausführung ist besonders platzsparend. Vorteilhaft ist es, wenn der Ausgangskanal 19 und der Eingangskanal 16 eine gemeinsame zentrale Achse 45 aufweisen.

Die zentralen Mittelachsen 13a, 14a des ersten Anschlusses 13 und des zweiten Anschlusses 14 definieren eine Ebene 60 bzw. liegen in dieser Ebene 60. Die zentrale Längs- bzw. Zylinderachse bzw. Drehachse 40 des Kükens 15 ist im Wesentlichen parallel zu dieser Ebene 60 ausgerichtet bzw. verläuft insbesondere in der Ebene 60. Gut erkennbar ist dies in den Fig. 3c, 4c und 5c.

Eine vorteilhafte Anschlussgeometrie und eine erleichterte Anschlussmöglichkeit wird dadurch erreicht, dass die Mittelachsen 13a, 14a der Anschlüsse 13, 14 zueinander parallel ausgerichtet sind. Außerdem ist es vorteilhaft, wenn die Längs- bzw. Zylinderachse 40 des Kükens im Bereich zwischen den zentralen Mittelachsen 13a, 14a verläuft. Dies führt zu einer vorteilhaften Symmetrie des Ventils 1. Besonders vorteilhaft ist es, wenn gleichzeitig die Längs- bzw. Zylinderachse 40 parallel zu zumindest einer der beiden zentralen Mittelachsen 13a,14a, vorzugsweise zu beiden, ausgerichtet ist.

Die bevorzugte Ausführungsform, bei der die zentrale Längs- bzw. Zylinderachse 40 des Kükens 15 in der Ebene 60 verläuft, bei der die zentralen Mittelachsen 13a,14a zueinander parallel ausgerichtet sind, die Längs- bzw. Zylinderachse 40 im Bereich zwischen den zentralen Mittelachsen 13a, 14a verläuft und gleichzeitig parallel zu den zentralen Mittelachsen 13a, 14a ausgerichtet ist, ist in den hier gezeigten Fig. 3, 4 und 5 dargestellt.

Entscheidend für die Möglichkeit die Heizströme bzw. die Durchflussrichtungen zu regulieren ist das Küken 15 und die Ausgestaltung der darin ausgebildeten Durchflusskanäle. Bei der in den Fig. 3a bis 3d, 4a bis 4d und 5a bis 5c gezeigten Ausführungsform des Kükens 15 sind diese Durchflusskanäle vorteilhafterweise ausschließlich normal und parallel zur Längs- bzw. Zylinderachse 40 ausgerichtet. Derartige Durchflusskanäle werden insbesondere durch Bohrungen hergestellt.

Das Küken 15 selbst ist im wesentlichen zylinderförmig, wobei die Längs- bzw. Zylinderachse 40 der Drehachse des Zylinders entspricht und parallel zum Zylindermantel durch die Mittelpunkte der Kreisflächen verläuft.

Das Küken 15 besitzt auf seiner dem Ventil 1 abgewandten Seite eine Ausnehmung 27, in die ein Schraubenschlüssel oder ein ähnliches Werkzeug eingeführt werden kann. Damit kann die Stellung des Kükens 15 verändert werden bzw. das Küken 15 verdreht werden.

Das Küken 15 liegt mit seiner dem Ventil 1 zugewendeten Bodenfläche 28 auf dem Kükenabstützboden 26 auf. In diesem Kükenabstützboden 26 sind eine erste Durchlassöffnung 31 und eine zweite Durchlassöffnung 32 ausgebildet, über die Heizmedium zwischen dem Küken 15 und dem Heizkreislauf ausgetauscht werden kann.

Auf seiner dem Ventil 1 zugewendeten Seite bzw. an der Bodenfläche 28 sind eine Vorlauföffnung 31 a und eine Rücklauföffnung 32a ausgebildet, die vorzugsweise diametral bezüglich der Längs- bzw. Zylinderachse 40 gegenüberliegen. Das Heizmedium tritt durch die Vorlauföffnung 31a in das Küken 15 ein und verlässt dieses in Richtung des Heizkörpers 9. Das vom Heizkörper 9 kommende Heizmedium verlässt das Küken 15 über die Rücklauföffnung 32a.

Werden die Vorlauföffnung 31 a bzw. die Rücklauföffnung 32a mit der ersten Durchlassöffnung 31 bzw. der zweiten Durchlassöffnung 32 durch Drehung des Kükens 15 in, zumindest teilweise, Deckung bzw. Überlappung gebracht, ist eine derartige strömungs- bzw. fluidtechnische Wirkverbindung gegeben.

In der Zylinderbodenfläche des Kükens 15 sind außerdem zwei, vorzugsweise diametral bezüglich der Längs- bzw. Zylinderachse 45 gegenüberliegende, Dichtflächen 17 vorgesehen. Diese Dichtflächen 17 bestehen insbesondere aus Kunststoff, vorzugsweise einem Elastomer, oder Keramik. In der Sperrstellung 90 des Kükens liegen diese Dichtflächen 17 über der ersten Durchlassöffnung 31 und der zweiten Durchlassöffnung 32 und verschließen diese fluiddicht, wodurch der Heizmediumstrom unterbrochen wird.

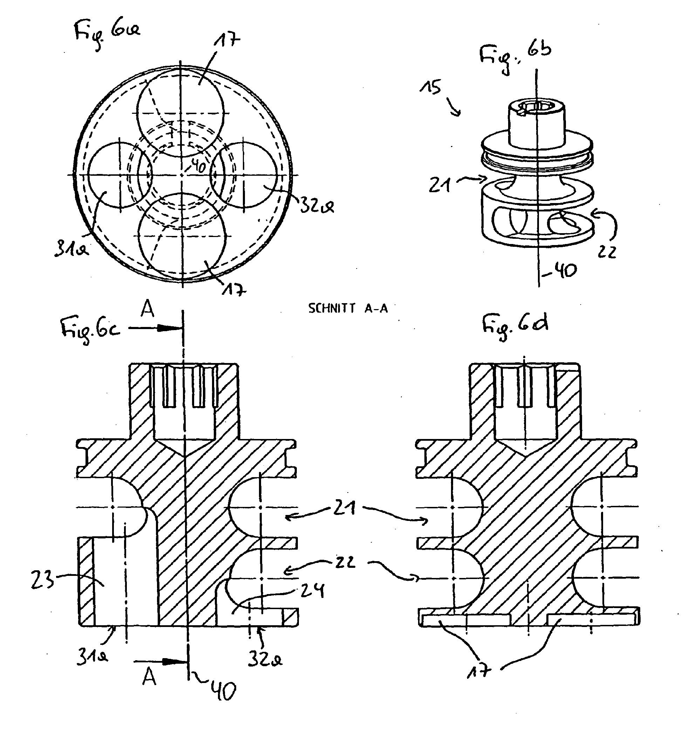

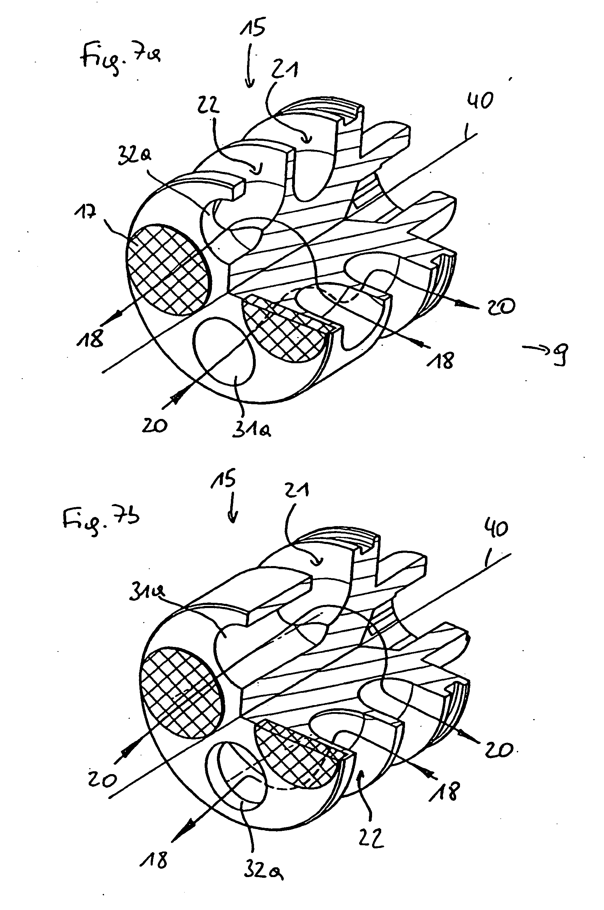

Eine alternative Ausführungsform des Küken 15 ist in den Fig. 6a bis 6d bzw. 7a und b dargestellt.

Das Küken 15 weist dabei eine entlang seines Umfangs, insbesondere durchgehend verlaufende, zur Längs- bzw. Zylinderachse 40 rotationssymmetrische erste Ausnehmung bzw. Ringnut bzw. Einkerbung 21 auf, die insbesondere in dem der Vorlauföffnung 31 a bzw. der Bodenfläche 28 fernen Bereich angeordnet ist. Zusätzlich kann eine zweite Ausnehmung bzw. Ringnut bzw. Einkerbung 22 vorgesehen sein, die ebenfalls entlang des Umfangs des Kükens 15 verläuft, zur Längs- bzw. Zylinderachse 40 rotationssymmetrisch ist und im Bereich nahe der Vorlauföffnung 31 a bzw. der Bodenfläche 28 ausbildet ist. Diese Einkerbung 22 verläuft jedoch nur über maximal 80% der Umfangslänge durchgehend.

Die Einkerbungen 21, 22 werden während des Betriebs vom Heizmedium durchströmt und bilden bzw. definieren bzw. begrenzen die Durchflusswege durch das Küken 15. In die erste Einkerbung 21 mündet dabei ein, insbesondere parallel zur Längs- bzw. Zylinderachse 60 verlaufender, erster Durchflusskanal 23, der die in der Bodenfläche 28 ausgebildete Vorlauföffnung 31 a mit dieser ersten Einkerbung 21 strömungs- bzw. fluidtechnisch verbindet. In die zweite Einkerbung 22 mündet ein zweiter Durchflusskanal 24, der insbesondere parallel zur Längs- bzw. Zylinderachse 40 verläuft, und somit die Rücklauföffnung 32a, die ebenfalls in der Bodenfläche 28 ausgebildet ist, mit dieser zweiten Einkerbung 22 strömungs- bzw. fluidtechnisch verbindet.

Die Durchflusswege durch ein derartiges Küken 15 sind in den Fig. 7a und b dargestellt. Das Heizmedium tritt durch die Vorlauföffnung 31 a in das Küken ein, fließt durch den ersten Durchflusskanal 23 in die erste Einkerbung 21, fließt weiter entlang dieser Einkerbung 21, bis es in den Ausgangskanal 19 in Richtung des Heizkörpers 9 weiterfließen kann.

Das vom Heizkörper 9 kommende rücklaufende Heizmedium 18 tritt in das Küken 15 im Bereich der zweiten Einkerbung 22 ein, fließt eine gewisse Wegstrecke entlang dieser zweiten Einkerbung 22 und verlässt durch den zweiten Durchflusskanal und über die Rücklauföffnung 32a das Küken 15 in Richtung Heizkreislauf.

Vorteilhaft ist es, wenn zwischen dem ersten Anschluss 13 und dem zweiten Anschluss 14 eine vom Küken 15 räumlich getrennt verlaufende Bypassverbindung 35 vorgesehen ist.

In dieser Bypassverbindung 35, insbesondere im Bereich der Längs- bzw. Zylinderachse 40, bzw. im Heizungsrohr zwischen den Anschlüssen 13, 14 bzw. zwischen dem Kükenabstützboden 26 und der dem Ventil 1 abgewendeten Seite des Heizungsrohres kann ein Lagerzapfen 25 zur Abstützung ausgebildet sein. Dieser dient insbesondere dazu, Drücke, die auf das Küken 15 ausgeübt werden, abzufangen und die inhärente Stabilität des Ventils 1 zu steigern.

In den Fig. 3c, 4c und 5c sind die unterschiedlichen Stellungen bzw. Positionen des Kükens 15 angegeben. Zur Verdeutlichung sind die Durchflusswege in Detailansichten des Kükens 15 vergrößert dargestellt. Im Prinzip sind drei wesentliche Ventil- bzw. Durchflussstellungen möglich.

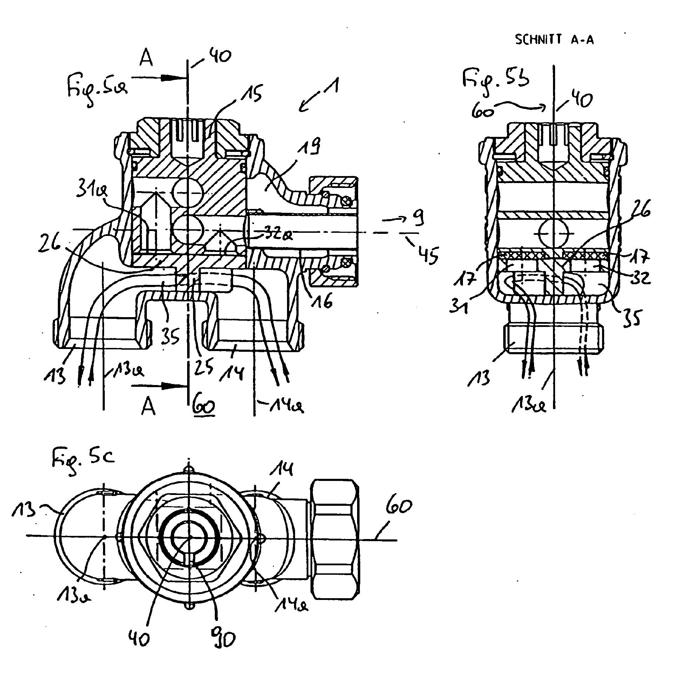

In einer ersten Durchflussstellung 70 gemäß Fig. 3a bis 3d, die durch eine Drehung des Kükens 15 von einer Null- bzw. Sperrstellung 90 (Fig. 5a bis 5c) erreicht wird, steht das Küken 15 in der vorliegenden Ausführungsform so, dass folgende Durchflusswege gestattet sind: Das Heizmedium gelangt durch den als Vorlaufanschluss fungierenden ersten Anschluss 13 über die erste Durchlassöffnung 31 und die Vorlauföffnung 31 a ins Küken 15. Von dort strömt das Heizmedium in den Ausgangskanal 19 und in den Heizkörper 9. Der Heizungsrücklauf 18 gelangt durch den Eingangskanal 16 ins Ventil 1 zurück und verlässt über das Küken 15, d.h. über die Rücklauföffnung 32a und die zweite Durchlassöffnung 32 über den zweiten Anschluss 14, das Ventil 1 und fließt in den Heizkreislauf zurück. Zusätzlich fließt bei dieser Ausführungsform ein ständiger Heizfluidstrom durch die Bypassverbindung 35, und zwar vom ersten Anschluss 13 über den zweiten Anschluss 14 zurück zum Heizkreislauf.

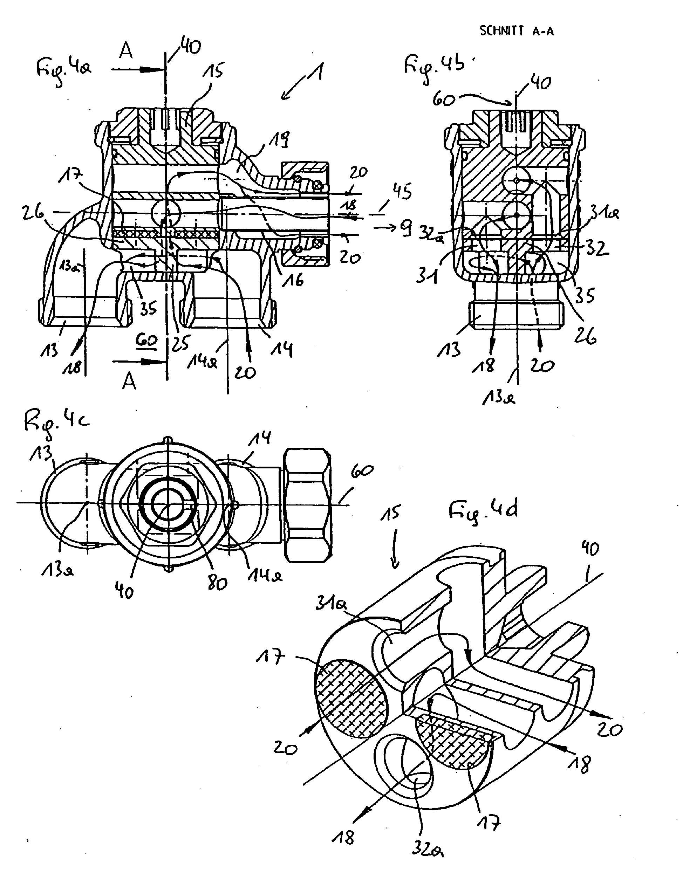

Wird das Küken gemäß Fig. 4a-d von der Null- bzw. Sperrstellung 90 ausgehend, bis zu einer zweiten, zur ersten um 180° veränderten, Durchflussstellung 80 gedreht, so ergibt sich folgende, zur obigen komplementäre, Strömungscharakteristik: Der zweite Anschluss 14 fungiert nun als Vorlaufanschluss, durch den Heizmedium vom Heizkreislauf in das Ventil 1 einströmt. Von dort gelangt das Heizmedium über die zweite Durchgangsöffnung 32 und die Vorlauföffnung 31 a ins Küken 15. Das Heizmedium strömt durch das Küken 15 in den Ausgangkanal 19 und verlässt als Heizungsvorlauf 20 das Ventil 1 in Richtung Heizkörper 9. Der Heizungsrücklauf 18 gelangt wieder über den Eingangkanal 16 ins Ventil 1 zurück und verlässt das Ventil 1 über das Küken 15, d.h. durch die Rücklauföffnung 32a und die erste Durchlassöffnung 31, über den als Rücklaufanschluss fungierenden ersten Anschluss 13. Zusätzlich fließt ein ständiger Heizfluidstrom durch die Bypassverbindung 35, und zwar vom zweiten Anschluss 14 über den ersten Anschluss 13 zurück zum Heizkreislauf.

In der Sperrstellung 90 gemäß Fig. 5a bis 5c steht das Küken 15 so, dass die Dichtflächen 17 die im Kükenabstützboden 26 ausgebildeten Durchlassöffnungen 31,32 fluiddicht verschließen. Das heißt, die strömungstechnische Verbindung des ersten Anschlusses 13 bzw. des zweiten Anschlusses 14 mit dem Ausgangskanal 19 bzw. mit dem Eingangskanal 16 ist nicht mehr gegeben. Der erste Anschluss 13, der entweder als Vorlauf- oder als Rücklaufanschluss fungieren kann, ist mit dem zweiten Anschluss 14, der komplementär als Rücklauf- oder als Vorlaufanschluss fungiert, ausschließlich über die Bypassverbindung 35 verbunden, d.h. der gesamte Heizmittelstrom fließt über die Bypassverbindung 35, der Heizkörper 9 ist aus dem Kreislauf ausgekoppelt.

Durch diese Möglichkeit einer Sperrung kann die Heizmediumzufuhr zum Heizkörper 9 gänzlich unterbunden werden und der Heizkörper 9 kann abmontiert bzw. ausgetauscht werden. Die Möglichkeit einer Sperrstellung 90 muss jedoch nicht zwingend vorgesehen sein.

Es ist festzustellen, dass das Heizmedium das Ventil 1, vorzugsweise immer, durch den Ausgangskanal 19 als Heizungsvorlauf 20 in Richtung Heizkörper 9 verlassen sollte und als Heizungsrücklauf 18 vom Heizkörper 9 über den Eingangskanal 16 in das Ventil 1 zurückströmen sollte. Damit kann sichergestellt werden, dass das Heizmedium immer in den gleichen Anschluss des Heizkörpers 9, nämlich vorteilhafterweise den Radiatorvorlaufanschluss 8, einströmt und zwar unabhängig von der Strömungsrichtung im Heizkreislauf. Zwar könnte der Einstrom in den Heizkörper 9 auch umgekehrt erfolgen, dies ist allerdings aus heiztechnischen Überlegungen ungünstig, da sich die Heizleistung des Heizkörpers verringert.

Die Strömungsrichtung im ersten Anschluss 13 bzw. im zweiten Anschluss 14 ändert sich je nach Stellung des Kükens 15. Damit wird gewährleistet, dass das Ventil 1 auf die bauseitig meist vormontierten Stutzen aufgesetzt werden kann, unabhängig von der im Heizkreislauf vorgegebenen Strömungsrichtung des Heizmediums. Das heißt, die Ventile 1 können ohne Kenntnis bzw. Berücksichtigung der Strömungsrichtung montiert werden ohne Rohrleitungen überkreuzen zu müssen. Die Einstellung der Durchflussrichtung erfolgt später.

Auf dem Gehäuse des Ventils 1 können Hinweismarkierungen in Form von Pfeilen vorgesehen sein, die die Richtung des Vorlaufes anzeigen und nach denen die Stellung des Kükens 15 vorgenommen werden kann.

Die Anschlussarmatur umfasst bei der erfindungsgemäßen Ausführungsform weiters ein T-Stück 2, das mit dem Ausgangskanal 19 und dem Eingangskanal 16 des Ventils 1 strömungstechnisch verbunden ist. Dieses T-Stück 2 gewährleistet, dass der vom Ventil 1 räumlich getrennt vom Heizungsrücklauf 18 ausströmende Heizungsvorlauf 20 zum Radiatorvorlaufanschluss 8 des Heizkörpers geleitet wird und dass der Heizungsrücklauf 18 separat in den Eingangskanal 16 des Ventils 1 gelangt. Zu diesem Zwecke ist im T-Stück 2 ein Rohrelement 12 vorgesehen, das insbesondere den gleichen Durchmesser wie der Eingangskanal 16 aufweist und mit diesem in direkter Strömungsverbindung steht bzw. mit diesem, insbesondere dicht, verbunden oder an diesen anschließbar ist. Dieses Rohrelement 12 kann vorteilhafterweise so ausgebildet sein, dass es zumindest teilweise durch den Radiatorrücklaufanschluss 7 des Heizkörpers 9 hindurch in den Heizkörper 9 hineinragt.

Vorteilhafterweise weisen das Rohrelement 12, der Eingangskanal 16 und der Ausgangskanal 19 eine gemeinsame zentrale Achse 45 auf. Damit ist gewährleistet, dass das Ventil 1 gegenüber dem bzw. relativ zum in dieser Ausführungsform starr angeordneten T-Stück 2 um diese zentrale Achse 45 verdrehbar bzw. verschwenkbar ist. Dies ist beim Einbau bzw. bei der Montage wichtig, da es durch diese konstruktive Ausführung unwesentlich ist, ob sich das Ventil 1 bzw. das T-Stück 2 links oder rechts neben dem Heizkörper 9 befinden. Die Schwenkbarkeit des Ventils 1 gegenüber dem T-Stück 2 bzw. dem Heizkörper 9 ist auch aus dem Grund vorteilhaft, weil dadurch der Anschluss an den Heizkreis senkrecht zur Achse 45 in beliebigen radialen Richtungen bzw. Winkelstellung, vorzugsweise nach unten in den Boden oder nach hinten an die Wand oder schräg, erfolgen kann bzw. ein Anschluss an aus der Wand ragende bauseitige Anschlüsse einfach erfolgen kann.

Ein weiterer Faktor, der einen Einbau erleichtert, ist die Tatsache, dass das Ventil 1 und/oder das T-Stück 2 bezüglich der Ebene 60 des Ventils 1 im Wesentlichen symmetrisch sind.

## Patentansprüche

1. Anschlussarmatur für den Anschluss zumindest eines Heizkörpers (9) an einen, insbesondere als Einrohr-System ausgebildeten, Heizkreislauf einer Heizanlage, umfassend ein an den Heizkreislauf mit Vorlauf und Rücklauf anschließbares, schalt- bzw. regelbares Ventil (1), wobei für den Vorlauf bzw. den Rücklauf aus dem bzw. in den Heizkreislauf heizkreislaufseitige Anschlüsse, nämlich ein erster Anschluss (13) und ein zweiter Anschluss (14), vorgesehen sind, deren zentrale Mittelachsen (13a, 14a) in einer Ebene (60) liegen bzw. eine Ebene (60) definieren, wobei die Durchflusswege des Heizmediums vom Heizkreislauf durch das Ventil (1) hindurch zum Heizkörper (9) und zurück durch ein im wesentlichen zylindrisches, bezüglich seiner zentralen Längs- bzw. Zylinderachse (40) verdrehbares, die Durchflusswege in Abhängigkeit von seiner Stellung wechselseitig sperrendes bzw. öffnendes, Küken (15) geregelt sind, wobei die zentrale Längs- bzw. Zylinderachse (40) des Kükens (15) im wesentlichen parallel zur, insbesondere in der, Ebene (60) ausgerichtet ist bzw. verläuft,
wobei das Küken (15) in einer Ausnehmung bzw. Bohrung des Ventils (1) mit seiner Bodenfläche (28) auf einem Kükenabstützboden (26) gelagert ist,
**dadurch gekennzeichnet, dass**
in der Bodenfläche (28) des Kükens (15) eine Vorlauföffnung (31a), für den vom Heizkreislauf in das Küken (15) einströmenden Heizungsvorlauf (20), und eine Rücklauföffnung (32a), für den aus dem Küken (15) in Richtung des Heizkreislaufes ausströmenden, vom Heizkörper (9) zurückkommenden Heizungsrücklauf (18), ausgebildet sind,
und dass im Kükenabstützboden (26) eine erste Durchlassöffnung (31) und eine zweite Durchlassöffnung (32) ausgebildet sind, die durch Drehung des Kükens (15) in, zumindest teilweise, Deckung bzw. Überlappung mit der Vorlauföffnung (31a) und der Rücklauföffnung (32a) bringbar sind, wodurch eine fluidleitende bzw. strömungstechnische Verbindung zwischen dem Küken (15) und dem Heizkreislauf gegeben ist.

2. Anschlussarmatur nach Anspruch 1, **dadurch gekennzeichnet, dass** die Vorlauföffnung (31a) und die Rücklauföffnung (32a) und die erste Durchlassöffnung (31) und die zweite Durchlassöffnung (32) diametral bezüglich der Längs- bzw. Zylinderachse (40) gegenüberliegen.

3. Anschlussarmatur nach Anspruch 1 oder 2, **dadurch gekennzeichnet, dass** das Küken (15) eine entlang seines Umfangs, insbesondere durchgehend, verlaufende, zur Längs- bzw. Zylinderachse (40) rotationssymmetrische, insbesondere der Vorlauföffnung (31a) bzw. der Bodenfläche (28) ferne, erste Einkerbung (21) und gegebenenfalls eine entlang seines Umfangs verlaufende, zur Längs- bzw. Zylinderachse (40) rotationssymmetrische, insbesondere der Vorlauföffnung (31a) bzw. der Bodenfläche (28) nahe, zweite Einkerbung (22), die nur über maximal 80% der Umfangslänge durchgehend verläuft, aufweist, durch die Heizmedium durchströmt bzw. Durchflusswege gebildet bzw. definiert bzw. begrenzt werden.

4. Anschlussarmatur nach Anspruch 3, **dadurch gekennzeichnet, dass** in die erste Einkerbung (21) ein, insbesondere parallel zur Längs- bzw. Zylinderachse (40) verlaufender, erster Durchflusskanal (23) mündet, der die Vorlauföffnung (31a) mit der ersten Einkerbung (21) strömungstechnisch verbindet und dass in die zweite Einkerbung (22) ein, insbesondere parallel zur Längs- bzw. Zylinderachse (40) verlaufender, zweiter Durchflusskanal (24) mündet, der die Rücklauföffnung (32a) mit der zweiten Einkerbung (22) strömungstechnisch verbindet.

5. Anschlussarmatur nach einem der Ansprüche 1 bis 4, **dadurch gekennzeichnet, dass** auf der Bodenfläche (28) des Kükens (15) zwei Dichtflächen (17), insbesondere aus Kunststoff, vorzugsweise einem Elastomer, oder Keramik, ausgebildet sind, die durch Drehung des Kükens (15) in, zumindest teilweise, Deckung bzw. Überlappung mit der ersten Durchlassöffnung (31) und der zweiten Durchlassöffnung (32) bringbar sind, wodurch eine Absperrung der Durchflusswege durch die fluiddichte Verschließung der Durchlassöffnungen (31,32) erfolgt, wobei sich die Dichtflächen (17) vorzugsweise diametral bezüglich der Längs- bzw. Zylinderachse (40) gegenüberliegen.

6. Anschlussarmatur nach einem der Ansprüche 1 bis 5, **dadurch gekennzeichnet, dass** das Ventil (1) einen heizkörperseitigen Ausgangskanal (19), durch den das Heizmedium vom Heizkreislauf in den Heizkörper (9) gelangt, und einen heizkörperseitigen Eingangskanal (16) aufweist, durch den das Heizmedium aus dem Heizkörper (9) zurück zum Ventil (1) bzw. zum Heizkreislauf gelangt, wobei der Eingangskanal (16) zumindest teilweise im Ausgangskanal (19) liegt bzw. zumindest teilweise von diesem umschlossen wird, wobei der Ausgangskanal (19) und der Eingangskanal (16) gegebenenfalls eine gemeinsame zentrale Achse (45) aufweisen.

7. Anschlussarmatur nach einem der Ansprüche 1 bis 6, **dadurch gekennzeichnet, dass** das Ventil (1) einen für den Heizungsvorlauf (20) vorgesehenen Ausgangskanal (19), durch den das Heizmedium aus dem Ventil (1) zum Heizkörper (9) hin ausströmt, sowie einen für den Heizungsrücklauf (18) vorgesehenen Eingangskanal (16), durch den Heizmedium vom Heizkörper (9) in das Ventil (1) einströmt und von dort zurück zum Heizkreislauf gelangt, aufweist, wobei die im Küken (15) vorgesehenen Durchflusswege derart ausgebildet sind, dass das Heizmedium das Ventil (1) immer und unabhängig von der Strömungsrichtung des Heizmediums im Heizkreislauf bzw. der Stellung des Kükens (15) bzw. der Wahl des ersten Anschlusses (13) und des zweiten Anschlusses (14) als Vorlauf oder Rücklauf, durch den Ausgangskanal (19) als Heizungsvorlauf (20) in Richtung Heizkörper (9) verlässt und über den Eingangskanal (16) als Heizungsrücklauf (18) vom Heizkörper (9) in das Ventil (1) zurückströmt.

8. Anschlussarmatur nach einem der Ansprüche 1 bis 7, **dadurch gekennzeichnet,**
- **dass** das Küken (15) im Ventil (1) zumindest eine erste Durchflussstellung (70) (Fig. 3a-d) hat, bei der der als Vorlaufanschluss fungierende erste Anschluss (13) mit dem Ausgangskanal (19) und der als Rücklauf fungierende zweite Anschluss (14) mit dem Eingangskanal (16) fluidleitend bzw. strömungstechnisch in Verbindung stehen, wobei gegebenenfalls der erste Anschluss (13) zusätzlich direkt mit dem zweiten Anschluss (14) fluidleitend bzw. strömungstechnisch über die Bypassverbindung (35) verbunden ist,
- **dass** das Küken (15) im Ventil (1) zumindest eine .zweite komplementäre Durchflussstellung (80) (Fig. 4a-d) hat, bei der der als Vorlaufanschluss fungierende zweite Anschluss (14) mit dem Ausgangskanal (19) und der als Rücklauf fungierende erste Anschluss (13) mit dem Eingangskanal (16) fluidleitend bzw. strömungstechnisch in Verbindung stehen, wobei gegebenenfalls der erste Anschluss (13) direkt mit dem zweiten Anschluss (14) fluidleitend bzw. strömungstechnisch über die Bypassverbindung (35) verbunden ist,
- und **dass** das Küken (15) im Ventil (1) gegebenenfalls zumindest eine Sperrstellung (90) hat, bei der die fluidleitenden bzw. strömungstechnischen Verbindung des ersten Anschlusses (13) und des zweiten Anschlusses (14) mit dem Ausgangskanal (19) sowie dem Eingangskanal (16) gesperrt sind und gegebenenfalls der erste Anschluss (13) mit dem zweiten Anschluss (14) nur über die Bypassverbindung (35) fluidleitend bzw. strömungstechnisch verbunden ist.

9. Anschlussarmatur nach einem der Ansprüche 1 bis 8, **dadurch gekennzeichnet, dass** die zentralen Mittelachsen (13a,14a) der Anschlüsse (13,14) zueinander parallel ausgerichtet sind und/oder
dass die Längs- bzw. Zylinderachse (40) des Kükens (15) zwischen den zentralen Mittelachsen (13a,14a) der Anschlüsse (13,14) verläuft und/oder
dass die Längs- bzw. Zylinderachse (40) des Kükens (15) parallel zu zumindest einer der beiden zentralen Mittelachsen (13a,14a) ausgerichtet ist und/oder
dass im Küken (15), vorzugsweise ausschließlich, normal und/oder parallel zur Längs- bzw. Zylinderachse (40) ausgerichtete Durchflusskanäle ausgebildet sind.

10. Anschlussarmatur nach einem der Ansprüche 1 bis 9, **dadurch gekennzeichnet, dass** zwischen dem ersten Anschluss (13) und dem zweiten Anschluss (14) eine vom Küken (15) räumlich getrennt verlaufende Bypassverbindung (35) vorgesehen ist, wobei vorzugsweise in der Bypassverbindung (35), insbesondere im Bereich der Längs- bzw. Zylinderachse (40), bzw. im Heizungsrohr zwischen den Anschlüssen (13, 14) bzw. zwischen dem Kükenabstützboden (26) und der dem Ventil (1) abgewendeten Seite des Heizungsrohres ein Lagerzapfen (25) zur Abstützung ausgebildet ist.

11. Anschlussarmatur nach einem der Ansprüche 6 bis 10, **dadurch gekennzeichnet, dass** ein mit dem Ausgangskanal (19) und dem Eingangskanal (16) des Ventils (1) verbundenes T-Stück (2), mit dem das Heizmedium als Vorlauf in den Heizkörper (9), getrennt vom Rücklauf aus dem Heizkörper (9), einspeisbar ist, vorgesehen ist, dessen eines Ende mit einem Radiatorvorlaufanschluss (8) des Heizkörpers (9) und dessen anderes Ende mit einem Radiatorrücklaufanschluss (7) des Heizkörpers (9) verbunden ist, insbesondere über ein im T-Stück (2) vorgesehenes Rohrelement (12), das mit dem Eingangskanal (16) des Ventils (1) in direkter Strömungsverbindung steht bzw. an diesen abschließbar ist und vorzugsweise zumindest mit einem Teilbereich in den Heizkörper (9), vorzugsweise im Bereich des Radiatorrücklaufanschlusses (7), ragt, wobei vorzugsweise das Rohrelement (12), der Eingangskanal (16) und der Ausgangskanal (19) eine gemeinsame zentrale Achse (45) aufweisen und gegebenenfalls das Ventil (1) um diese Achse (45) relativ gegenüber dem T-Stück (2) verdrehbar bzw. verschwenkbar ist, um den Anschluss des Ventils (1) an den Heizkreislauf in beliebigen Winkelstellungen zu gewährleisten.

## Claims

1. Connection fitting for connecting at least one heating body (9) to a heating circuit, particularly formed as a single duct system, of a heating installation, comprising a switchable or controllable valve (1), that may be connected to said heating circuit including a forward stroke and a return stroke, wherein connections on the side of said heating circuit are provided for said forward stroke and said return stroke into or from said heating circuit respectively, namely a first connection (13) and a second connection (14), the central middle axes (13a, 14a) of which are situated in one plane (60) or define one plane (60), the passage ways of the heating medium from said heating circuit, through said valve (1) towards said heating body (9) and back are controlled by a substantially cylindrical stopcock (15), which may be turned with respect to its central longitudinal or cylinder axis (40) and which alternately blocks or opens said passage ways in dependence upon its position, said central longitudinal or cylinder axis (40) of said stopcock (15) being oriented and extending substantially parallel to, particularly in, said plane (60), wherein said stopcock (15) with its bottom surface (28) is supported within a recess or a bore of said valve (1) on a stopcock bearing bottom (26),
**characterised in that**
in said bottom surface (28) of said stopcock (15), a forward stroke opening (31 a) for the heating forward stroke fluid (20), which flows in from said heating circuit into said stopcock (15), and a return stroke opening (32a) for the heating return stroke fluid (18), which comes back from said heating body (9) and flows out of said stopcock (15) in the direction towards said heating circuit, are formed,
and that in said stopcock bearing bottom (26), a first passage opening (31) and a second passage opening (32) are formed which, by turning said stopcock (15), may be brought, at least partially, into congruence or into overlapping with said forward stroke opening (31a) and said return stroke opening (32a), thus resulting in a fluid conductive or inflow technical connection between said stopcock (15) and said heating circuit.

2. Connection fitting according to claim 1, **characterised in that** said forward stroke opening (31 a) and said return stroke opening (32a) and said first passage opening (31) and said second passage opening (32) are diametrically opposed with respect to said central longitudinal or cylinder axis (40).

3. Connection fitting according to claim 1 or 2, **characterised in that** said stopcock (15) comprises a first recess (21) which extends along its circumference, particularly continuously, and is symmetrical with respect to rotation to said central longitudinal or cylinder axis (40), particularly being remote from said forward stroke opening (31a) and/or said bottom surface (28), and a second recess (22) which extends along its circumference and is symmetrical with respect to rotation to said central longitudinal or cylinder axis (40), particularly being near said forward stroke opening (31a) and/or said bottom surface (28), and which extends continuously only over 80% in maximum of the circumference's length, through which heating medium flows and passage ways are formed or defined or delimited.

4. Connection fitting according to claim 3, **characterised in that** a first passage channel (23), which in particular extends parallel to said central longitudinal or cylinder axis (40), orifices into said first recess (21) and connects in a inflow technical manner said forward stroke opening (31 a) with said first recess (21), and that a second passage channel (24), which in particular extends parallel to said central longitudinal or cylinder axis (40), orifices into said second recess (22) and connects in a inflow technical manner said return stroke opening (32a) with said second recess (22).

5. Connection fitting according to any of claims 1 to 4, **characterised in that** two sealing surfaces (17), particularly of plastic material, preferably of an elastomer, or of ceramics are formed on said bottom surface (28) of said stopcock (15), which, by turning said stopcock (15), may be brought, at least partially, into congruence or into overlapping with said first passage opening (31) and said second passage opening (32), by which blocking of the passage ways is effected by fluid tightly closing said passage openings (31, 32), said sealing surfaces (17) preferably being diametrically opposed with with respect to said central longitudinal or cylinder axis (40).

6. Connection fitting according to any of claims 1 to 5, **characterised in that** said valve (1), at the side of the heating body, comprises an outlet channel (19) through which the heating medium from the heating circuit reaches said heating body (9), and, at the side of the heating body, an inlet channel (16) through which the heating medium from the heating body (9) returns to the valve (1) and to the heating circuit, wherein said inlet channel (16) is located inside said outlet channel (19), at least in part, or is at least partly surrounded by the latter, the outlet channel (19) and the inlet channel (16) having optionally a central axis (45) in common.

7. Connection fitting according to any of claims 1 to 6, **characterised in that** said valve (1) comprises an outlet channel (19) provided for said heating forward stroke fluid (20) through which said heating medium flows out from said valve (1) towards said heating body (9), as well as an inlet channel (16) provided for said heating return stroke fluid (18) through which said heating medium flows in from said heating body (9) into said valve (1) and reaches therefrom said heating circuit, wherein the passage ways provided in said stopcock (15) are formed in a manner that said heating medium leaves said valve (1) always, and independently from the direction of flow of the heating medium in the heating circuit or of the position of said stopcock (15) or of the choice of said first connection (13) and said second connection (14) as the forward stroke or the return stroke, through said outlet channel (19) in the direction towards said heating body (9) as the heating forward stroke fluid (20) and flows back through said inlet channel (16) from said heating body (9) into said valve (1) as the heating return stroke fluid (18).

8. Connection fitting according to any of claims 1 to 7, **characterised in**
- **that** said stopcock (15) in said valve (1) has at least one passage position (70) (Fig. 3A-d) in which said first connection (13), functioning as the forward stroke connection, is in fluid conductive or inflow technical communication with said outlet channel (19), and said second connection (14), functioning as the return stroke, is in fluid conductive or inflow technical communication with said inlet channel (16), wherein said first connection (13), optionally, is additionally in fluid conductive or inflow technical communication with said second connection (14) via the by-pass connection (35),
- **that** said stopcock (15) in said valve (1) has at least one second, complementary passage position (80) (Fig. 4A-d) in which said second connection (14), functioning as the forward stroke connection, is in fluid conductive or inflow technical communication with said outlet channel (19), said first connection (13), functioning as the return stroke, is in fluid conductive or inflow technical communication with said inlet channel (16), wherein said first connection (13), optionally, is directly in fluid conductive or inflow technical communication with said second connection (14) via the by-pass connection (35),
- and **that** said stopcock (15) in said valve (1) has optionally at least one blocking position (90), wherein the fluid conductive or inflow technical communications of said first connection (13) and said second connection (14) with said outlet channel (19) as well as with said inlet channel (16) are blocked and said first connection (13), optionally, is only in fluid conductive or inflow technical communication with said second connection (14) via the by-pass connection (35).

9. Connection fitting according to any of claims 1 to 8, **characterised in that** said central middle axes (13a, 14a) of said connections (13, 14) are oriented parallel to each other, and/or
that said central longitudinal or cylinder axis (40) of said stopcock (15) extends between said central middle axes (13a, 14a) of said connections (13, 14), and/or
that said central longitudinal or cylinder axis (40) of said stopcock (15) is oriented parallel to at least one of said two central middle axes (13a, 14a), and/or
that passage channels are formed in said stopcock (15), which are, preferably exclusively, oriented perpendicularly and/or parallel to said central longitudinal or cylinder axis (40).

10. Connection fitting according to any of claims 1 to 9, **characterised in that** a by-pass connection (35), which extends spatially separated from said stopcock (15), is provided between said first connection (13) and said second connection (14), wherein a trunnion (25) for support is preferably formed in said by-pass connection (35), particularly in the region of said central longitudinal or cylinder axis (40), or in the heating pipe between said connections (13, 14), or between said stopcock bearing bottom (26) and the side turned away from said valve (1) of the heating pipe.

11. Connection fitting according to any of claims 6 to 10, **characterised in that** a T-piece (2), connected to said outlet channel (19) and to said inlet channel (16) of said valve (1), is provided, by which the heating medium may be fed into said heating body (9) as a forward stroke fluid, separated from the return stroke fluid from said heating body (9), wherein one end of said T-piece is connected to a radiator forward stroke connection (8) of said heating body (9), while the other end is connected to a radiator return stroke connection (7) of said heating body (9), in particular via a pipe element (12) provided in said T-piece (2), said element being in direct flow communication with the inlet channel (16) of said valve (1) or being connectable to it, and of which at least a partial region protrudes preferably into said heating body (9), preferably within the region of said radiator return stroke connection (7), wherein the pipe element (12), the inlet channel (16) and the outlet channel (19) have, preferably, a central axis (45) in common, and wherein said valve (1) is optionally rotatable or pivotal about this axis (45) in relation to said T-piece (2) in order to ensure the connection of said valve (1) to said heating circuit in any angular position.

## Revendications

1. Dispositif de raccordement pour raccorder au moins un corps de chauffage (9) à une circulation de chauffage, en particulier formé comme un système monotubulaire, d'une installation de chauffage, comprenant une soupape (1) de commande ou réglable, qui peut être raccordée à la circulation de chauffage, qui inclue un conduit d'alimentation et un conduit de retour, dans lequel des raccords, à savoir un premier raccord (13) et un deuxième raccord (14), sont prévus pour le conduit d'alimentation et pour le conduit de retour à partir de ou dans la circulation de chauffage, les axes médians centrales (13a, 14a) des dits raccords étant situés dans un seul plan (60) et définissent un plan (60), où les chemins de passage du milieu de chauffage à partir de la circulation de chauffage à travers de la soupape (1) vers le corps de chauffage (9) et retour sont réglés par un robinet (15) sensiblement cylindrique, qui peut être tourné par rapport à son axe longitudinal central ou de cylindre (40) et qui ferme ou ouvre tour à tour les chemins de passage en fonction de sa position, l'axe longitudinal central ou de cylindre (40) du robinet (15) étant orienté ou s'étendant sensiblement parallèlement au plan (60), particulièrement dans ledit plan,
dans lequel le robinet (15) est logé avec sa surface de fond (28) sur un fond d'appui de robinet (26) dans un creux ou dans un alésage de la soupape (1),
**caractérisé en ce, que**
dans la surface de fond (28) du robinet (15), on a formé une ouverture d'alimentation (31 a) pour le fluide d'alimentation de chauffage (20) affluant dans le robinet (15) à partir de la circulation de chauffage, et une ouverture de retour (32a) pour le fluide de retour (18) émanant à partir du robinet (15) en direction vers la circulation de chauffage et retournant du corps de chauffage (9)
et que dans le fond d'appui de robinet (26), on a formé une première ouverture de passage (31) et une deuxième ouverture de passage (32), qui, au moins partiellement, peuvent être posées en congruence ou en chevauchement avec l'ouverture d'alimentation (31 a) et avec l'ouverture de retour (32a) en tournant le robinet (15), formant ainsi une connexion conductrice de fluide ou fluidique entre le robinet (15) et la circulation de chauffage.

2. Dispositif de raccordement selon la revendication 1, **caractérisé en ce, que** l'ouverture d'alimentation (31 a) et l'ouverture de retour (32a) et la première ouverture de passage (31) et la deuxième ouverture de passage (32) sont diamétralement opposées par rapport à l'axe longitudinal central ou de cylindre (40).

3. Dispositif de raccordement selon la revendication 1 ou 2, **caractérisé en ce, que** le robinet (15) comprend une première rainure (21), qui s'étend le long de son périmètre, en particulier continuellement, à symétrie de révolution par rapport à l'axe longitudinal central ou de cylindre (40), en particulier étant loin de l'ouverture d'alimentation (31 a) ou de la surface de fond (28), et le cas échéant une deuxième rainure (22), qui s'étend le long de son périmètre, à symétrie de révolution par rapport à l'axe longitudinal central ou de cylindre (40), en particulier étant proche à l'ouverture d'alimentation (31 a) ou à la surface de fond (28), qui ne s'étend que sur 80% en maximum de la longueur du périmètre, à travers de laquelle le milieu de chauffage passe ou de chemins de passage sont formés ou définis ou délimités.

4. Dispositif de raccordement selon la revendication 3, **caractérisé en ce, qu**'un premier conduit de passage (23), qui en particulier s'étend parallèlement à l'axe longitudinal central ou de cylindre (40), débouche dans la première rainure (21) et relie d'une manière fluidique l'ouverture d'alimentation (31a) avec la première rainure (21), et qu'un deuxième conduit de passage (24), qui en particulier s'étend parallèlement à l'axe longitudinal central ou de cylindre (40), débouche dans la deuxième rainure (22) et relie d'une manière fluidique l'ouverture de retour (32a) avec la deuxième rainure (22).

5. Dispositif de raccordement selon une quelconque des revendications 1 à 4, **caractérisé en ce, que** deux surfaces d'étanchéité (17), particulièrement d'une matière plastique, de préférence d'un élastomère, ou de céramique, sont formées à la surface de fond (28) du robinet (15), qui peuvent être posées en congruence ou en chevauchement avec la première ouverture de passage (31) et avec la deuxième ouverture de passage (32) en tournant le robinet (15), formant ainsi un blocage des chemins de passage par la fermeture étanche au fluide des ouvertures de passage (31, 32), les surfaces d'étanchéité (17) étant de préférence diamétralement opposées par rapport à l'axe longitudinal central ou de cylindre (40).

6. Dispositif de raccordement selon une quelconque des revendications 1 à 5, **caractérisé en ce, que** la soupape (1) comprend un conduit de sortie (19) au côté du corps de chauffage, à travers duquel le milieu de chauffage arrive de la circulation de chauffage au corps de chauffage (9), et un conduit d'entrée (16) au côté du corps de chauffage, à travers duquel le milieu de chauffage retourne du corps de chauffage (9) à la soupape (1) et/ou à la circulation de chauffage, dans lequel le conduit d'entrée (16) est situé, au moins partiellement, dans le conduit de sortie (19) et est au moins partiellement entouré par ceci, le conduit de sortie (19) et le conduit d'entrée (16) ayant, le cas échéant, un axe central (45) en commun.

7. Dispositif de raccordement selon une quelconque des revendications 1 à 6, **caractérisé en ce, que** la soupape (1) comprend un conduit de sortie (19) prévu pour le fluide d'alimentation de chauffage (20), à travers lequel le milieu de chauffage émane de la soupape (1) vers le corps de chauffage (9), ainsi qu'un conduit d'entrée (16) prévu pour le fluide de retour (18), à travers duquel le milieu de chauffage afflue du corps de chauffage à la soupape (1) en retournant de par là à la circulation de chauffage, dans lequel les chemins de passage, prévus dans le robinet (15), sont formés d'une manière, que le milieu de chauffage quitte la soupape (1) toujours et indépendamment du sens d'écoulement du milieu de chauffage dans la circulation de chauffage et/ou de la position du robinet (15) et/ou de la choix du premier raccord (13) et du deuxième raccord (14) comme conduit d'alimentation ou comme conduit de retour, à travers le conduit de sortie (19) comme fluide d'alimentation de chauffage (20) en direction vers le corps de chauffage (9) et retourne à travers le conduit d'entrée (16) comme fluide de retour de chauffage (18) du corps de chauffage (9) à la soupape (1).

8. Dispositif de raccordement selon une quelconque des revendications 1 à 7, **caractérisé en ce,**
- **que** le robinet (15) dans la soupape (1) a au moins une première position de passage (70) (figures 3a-d), dans laquelle le premier raccord (13), ayant la fonction d'un raccord d'alimentation, est en connexion conductrice de fluide ou fluidique avec le conduit de sortie (19), et le deuxième raccord (14), ayant la fonction d'un raccord de retour, est en connexion conductrice de fluide ou fluidique avec le conduit d'entrée (16), où le cas échéant, le premier raccord (13) est additionnellement en connexion conductrice de fluide ou fluidique directement avec le deuxième raccord (14) à travers la connexion de dérivation (35),
- **que** le robinet (15) dans la soupape (1) a au moins une deuxième position de passage (80) (figures 4a-d) complémentaire, dans laquelle le deuxième raccord (14), ayant la fonction d'un raccord d'alimentation, est en connexion conductrice de fluide ou fluidique avec le conduit de sortie (19), et le premier raccord (13), ayant la fonction d'un raccord de retour, est en connexion conductrice de fluide ou fluidique avec le conduit d'entrée (16), où le cas échéant, le premier raccord (13) est directement en connexion conductrice de fluide ou fluidique avec le deuxième raccord (14) à travers la connexion de dérivation (35),
- et **que** le robinet (15) dans la soupape (1) a au moins une position de blocage (90), dans laquelle les connexions conductrices de fluide ou fluidiques du premier raccord (13) et du deuxième raccord (14) avec le conduit de sortie (19) ainsi qu'avec le conduit d'entrée (16) sont bloquées et, le cas échéant, c'est seulement le premier raccord (13), qui est en connexion conductrice de fluide ou fluidique avec le deuxième raccord (14) à travers la connexion de dérivation (35).

9. Dispositif de raccordement selon une quelconque des revendications 1 à 8, **caractérisé en ce, que** les axes médians centrales (13a, 14a) des raccords (13, 14) sont orientés parallèlement l'un à l'autre, et/ou
que l'axe longitudinal central ou de cylindre (40) du robinet (15) s'étend entre les axes médians centrales (13a, 14a) des raccords (13, 14), et ou
que l'axe longitudinal central ou de cylindre (40) du robinet (15) est orienté parallèlement à au moins un des deux axes médians centrales (13a, 14a), et/ou
que des conduits de passage, orientés perpendiculairement et/ou parallèlement à l'axe longitudinal central ou de cylindre (40), sont formés, de préférence exclusivement, dans le robinet (15).

10. Dispositif de raccordement selon une quelconque des revendications 1 à 9, **caractérisé en ce, qu**'une connexion de dérivation (35), qui s'étend séparément du robinet (15) dans l'espace, est prévue entre le premier raccord (13) et le deuxième raccord (14), dans lequel un tourillon (25) est formé comme appui, de préférence dans la connexion de dérivation (35), particulièrement dans la zone de l'axe longitudinal central ou de cylindre (40) ou dans le tube de chauffage entre les raccords (13, 14) ou entre le fond d'appui de robinet (26) et ce côté du tube de chauffage, qui est détourné de la soupape (1).

11. Dispositif de raccordement selon une quelconque des revendications 6 à 10, **caractérisé en ce, qu**'une pièce en T (2), relié au conduit de sortie (19) et au conduit d'entrée (16) de la soupape (1), est prévue, par laquelle le milieu de chauffage peut être alimenté comme fluide d'alimentation au corps de chauffage (9), séparé du fluide de retour à partir du corps de chauffage (9), un bout dudit pièce en T étant relié à un raccord d'alimentation de radiateur (8) du corps de chauffage (9) et l'autre bout étant relié avec un raccord de retour de radiateur (7) du corps de chauffage (9), particulièrement à travers un élément tubulaire (12) prévu dans la pièce en T (2), qui est en communication directe fluidique avec ou peut être relié au conduit d'entrée (16) de la soupape (1), et dont au moins une zone partielle fait saillie dans le corps de chauffage (9), de préférence dans la zone du raccord de retour de radiateur (7), dans lequel l'élément tubulaire (12), le conduit d'entrée (16) et le conduit de sortie (19) ont préférablement un axe central (45) en commun et, le cas échéant, la soupape (1) peut être tourné ou pivoté autour de cet axe (45) relativement par rapport à la pièce en T (2), pour assurer le raccordement de la soupape (1) à la circulation de chauffage dans des positions angulaires quelconques.
